# EUROPEAN PATENT SPECIFICATION

(11) **EP 3 431 332 B1**
(45) Date of publication and mention of the grant of the patent: **12.08.2020**
(21) Application number: 18184747.6
(22) Date of filing: 20.07.2018
(51) Int. Cl.: B60N 2/28

(54) **A PULL-UP BELT TIGHTENING STATE DETECTING SYSTEM AND A CHILD SAFETY CHAIR COMPRISING SUCH DETECTING SYSTEM**
SYSTEM ZUR ERKENNUNG DES STRAFFUNGSZUSTANDES EINES PULL-UP-GURTS UND KINDERSICHERHEITSSTUHL MIT SOLCH EINEM DETEKTIONSSYSTEM
SYSTÈME DE DÉTECTION D'ÉTAT DE SERRAGE DE COURROIE DE TRACTION ET SIÈGE DE SÉCURITÉ POUR ENFANT COMPRENANT UN TEL SYSTÈME DE DÉTECTION

(30) Priority: 21.07.2017 CN 201720895498 U
(43) Date of publication of application: 23.01.2019
(73) Proprietor: Ningbo Baby First Baby Products Co., Ltd., Yuyao, Zhejiang (CN)
(72) Inventor: XU, LIHONG, NINGBO, Zhejiang (CN)
(74) Representative: Ipside

(56) References cited:
- EP-A1- 1 621 394
- US-A1- 2005 280 297
- US-A1- 2007 228 802
- US-A1- 2013 201 013
- US-A1- 2015 130 605

## Description

### Technical Field

The invention relates to a pull-up belt tightening state detecting system and a child safety chair comprising such detecting system.

### Background of the Invention

The existing child safety chair can be fixed to the car seat via an ISOFIX interface and a LATCH interface. The LATCH interface is connected to the pull-up belt of the safety chair to secure the upper part of the safety chair. In the installation process, by lacking equipment or device that can indicate whether the pull-up belt is tightened, it is difficult for the operator to find out whether the pull-up belt is tightened. If the pull-up belt is not tightened, the safety chair is easily shaken during vehicle collision, thereby causing damage to the child in the safety chair.

It's known that patent document US2015/130605A1 describes systems and methods for child restraint monitoring, said methods provide information related to the proper utilization of a child restraint seat. Patent document EP1621394A1 describes a child seat for a motor vehicle which has a hook to be engaged with a supporting point fixed to the vehicle, a display device is provided on the hook to indicate that the hook engages with the tension on the vehicle-fixed stop. Patent document US2007/228802A1 describes a child safety device for a vehicle, which comprises a seat comprising a shell, a harness comprising at least one strap for retaining an occupant in the seat; and a sensor between a device on the strap and the seat shell for indicating whether the harness is sufficiently tensioned.

### Summary of the Invention

In order to overcome the deficiencies of the prior art, a first object of the present invention is to provide a pull-up belt tightening state detecting system for detecting whether the pull-up belt of the child safety chair is tightened.

A second object of the present invention is to provide a child safety chair that is equipped with a pull-up belt tightening detecting system.

The first object of the present invention is achieved by the following technical solutions:
A pull-up belt tightening state detecting system, comprising:
a trigger component, being mounted at a junction of the pull-up belt and the child safety chair, the trigger component sending a signal by the action of the pull-up belt when the pull-up belt is tightened; and
a communication component, being connected to the trigger component for transmitting the signal of the trigger component to a mobile device.

Further, the trigger component includes pressure sensor and trigger element, the pressure sensor being disposed in back of the child safety chair, the trigger element being disposed on an inner side of the pressure sensor, end of the pull-up belt being connected to the trigger element so that when the pull-up belt is tightened, the pressure sensor is pressed by the trigger element to send a signal.

Further, the trigger element is a buckle, and an end of the pull-up belt with an adjustable length is adapted to be connected to the trigger element.

Further, the pull-up belt tightening state detecting system comprises a mobile device. The mobile device and the communication component are connected by the signal. The mobile device includes a display module, and the mobile device displays the corresponding information on the display module based on the signal sent by the communication component.

The second object of the present invention is achieved by the following technical solutions:
A child safety chair, comprising a seat and a pull-up belt, wherein back of the seat is provided with pull-up belt mounting slot, and end of the pull-up belt is disposed in the pull-up belt mounting slot. The child safety chair further comprises a pull-up belt tightening state detecting system which comprises a trigger component and a communication component, wherein the trigger component is arranged in the pull-up belt mounting slot and cooperates with the end of the pull-up belt. When the pull-up belt is tightened, the trigger component is activated to send a signal by the pull-up belt, and the communication component is connected to the signal of the trigger component for transmitting the signal of the trigger component to a mobile device.

Further, the trigger component includes pressure sensor and trigger element. The trigger element is movably disposed in the pull-up belt mounting slot. The end of the pull-up belt is connected to the trigger element through opening of the pull-up belt mounting slot. The pressure sensor is disposed on the inner wall of the pull-up belt mounting slot, so that the trigger element presses against the pressure sensor when the pull-up belt is tightened.

Further, the trigger element is a buckle, and the end of the pull-up belt with an adjustable length is adapted to be connected to the trigger element.

Further, the trigger component comprises two pressure sensors, and the two pressure sensors are symmetrically disposed on the inner walls of the pull-up belt mounting slots.

Further, the back of the seat comprises two pull-up belt mounting slots disposed with spacing. Two ends of the pull-up belt are respectively disposed in the two pull-up belt mounting slots, and each of the pull-up belt mounting slots is provided with one said component and one said communication component.

Further, the pull-up belt tightening state detecting system comprises a mobile device. The mobile device and the communication component are connected by the signal. The mobile device includes a display module, and the mobile device displays the corresponding information on the display module based on the signal sent by the communication component.

Further, the trigger element is a buckle, and the end of the pull-up belt with an adjustable length is adapted to be connected to the trigger element.

Compared with prior art, the present invention has the following advantages and effects:
(1) The pull-up belt tightening state detecting system is used for detecting in real time whether the pull-up belt is in a tightening state, and transmitting the detection result to a mobile device, and then it can be monitored anytime and anywhere through the mobile device, thereby improving the security performance of the child safety chair.
(2) The invention presents a simple structure, requires almost no change of the original structures of the child safety chair and of the pull-up belt, which ensures that the production cost will not increase substantially.

### Brief description of the Drawings

FIG. 1 illustrates schematically an exploded view of a preferred embodiment of the present invention;
FIG. 2 illustrates a schematic view of the use of a preferred embodiment of the present invention;
FIG. 3 illustrates schematically a sectional view of a preferred embodiment of the present invention;
FIG. 4 is a partial enlargement view of the FIG. 3;
FIG. 5 illustrates a schematic view of a preferred embodiment of the mobile device of the present invention;
In the figures: 1. the seat; 10. the pull-up belt mounting slot; 2. the pull-up belt; 21. the end; 31. the trigger component; 311. the pressure sensor; 312. the trigger element; 4. the mobile device; 41. the display module.

### Detailed Description

The present invention will be further described in detail with reference to the accompanying drawings and embodiments. It should be noted that, in the case of non-collision, a new embodiment may be formed by any combination between the embodiments or between the technical features described below.

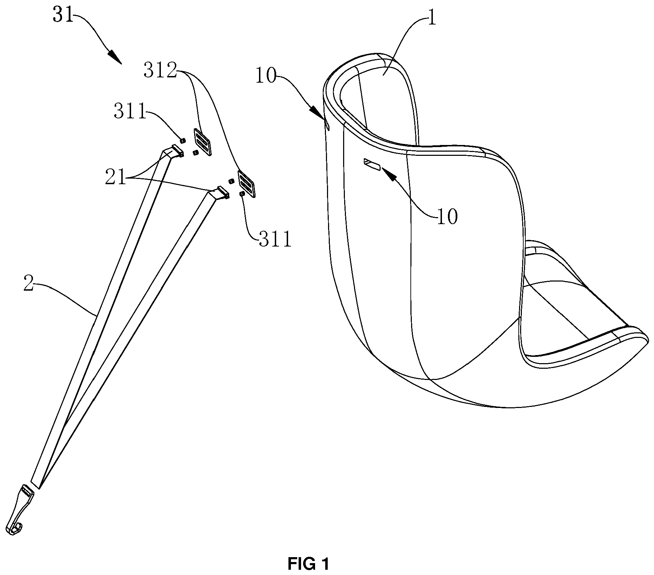

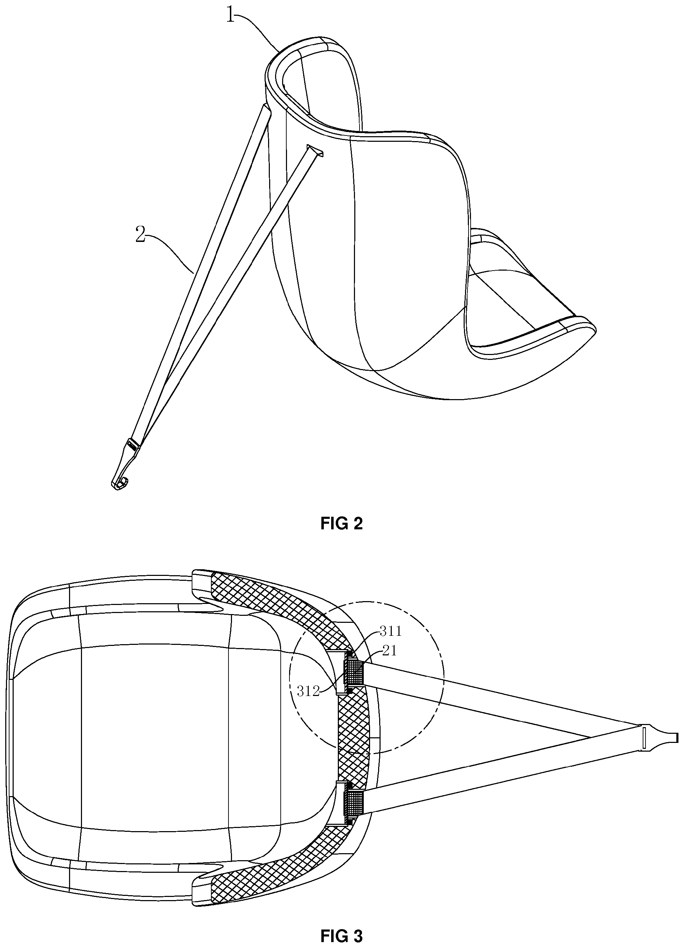

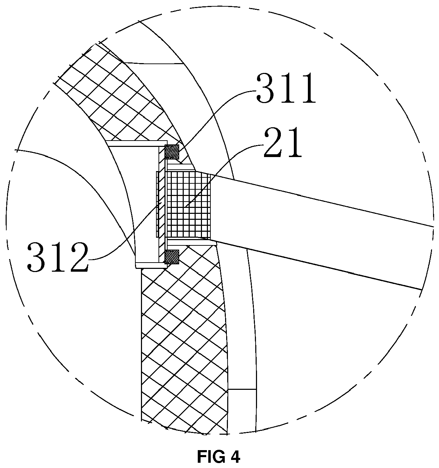

Referring to FIG.1 to FIG.4, a child safety chair of the invention comprises a seat, a pull-up belt and a pull-up belt tightening state detecting system. The back of the seat 1 is provided with pull-up belt mounting slots 10 and ends 21 of the pull-up belt 2 are disposed in the pull-up belt mounting slots. The pull-up belt tightening state detecting system is used for detecting whether the pull-up belt is tightened.

The pull-up belt tightening state detecting system comprises a trigger component 31 and a communication component (not shown in the figures). The trigger component 31 is disposed in the pull-up belt mounting slot 10 and cooperates with the end 21 of the pull-up belt 2. When the pull-up belt 2 is tightened, the trigger component 31 is activated to send a signal by the pull-up belt 2. The communication component is connected to the trigger component 31 by the signal for transmitting the signal of the trigger component 31 to a mobile device 4.

The trigger component 31 includes pressure sensor 311 and trigger element 312. The trigger element 312 is movably disposed in the pull-up belt mounting slot 10, and the end 21 of the pull-up belt is connected to the trigger element 312 through opening of the pull-up belt mounting slot 10. The dimension of the trigger element 312 is larger than the dimension of the opening of the pull-up belt mounting slot 10. When the pull-up belt is tightened, the trigger element is driven by the pull-up belt to rest against the opening of the pull-up belt mounting slot 10; therefore, the seat 1 is fixed by the pull-up belt 2. The pressure sensor 311 is disposed on the inner wall near the opening of the pull-up belt mounting slot 10, so that the trigger element 312 presses against the pressure sensor 311 when the pull-up belt 2 is tightened, and therefore the pressure sensor 311 is subjected to the pressure and send a signal.

Preferably, the trigger element 312 is a buckle, and the end 21 of the pull-up belt with an adjustable length is connected to the trigger element 312. If the pull-up belt 2 is not tightened, the user can adjust the length of the pull-up belt 2 with the trigger element 312 to tighten the pull-up belt 2.

The communication component includes a processor and a wireless communication module, and the processor is connected to the pressure sensor 311 for receiving and processing the signal from the pressure sensor 311. The information processed by the processor is sent to the mobile device 4 through the wireless communication module. Preferably, the wireless communication module is a Bluetooth module.

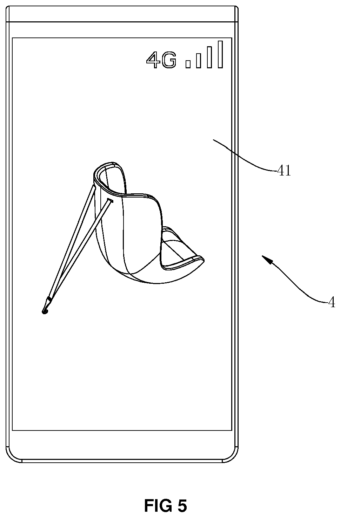

The mobile device 4 can be a portable electronic device such as a mobile phone, a tablet computer, a smart watch, etc. Referring to FIG. 5, the mobile device 4 includes a display module 41. The display module 41 displays the data of the pressure sensor and the intelligent analysis result to the user, so that the user can perform related operations.

Further, the trigger component 31 includes two pressure sensors 311. The two pressure sensors 311 are symmetrically disposed on the inner walls of the pull-up belt mounting slots 10. By providing two pressure sensors 311, it is possible to detect in real time whether the force direction of the pull-up belt 2 is normal. If the pressure values of the two pressure sensors 311 are not much different, the force direction of the pull-up belt 2 is substantially along the direction of the pull-up belt 2; if the pressure values of the two pressure sensors 311 are obviously different, the pull-up belt 2 may have a large offset, and the user should examine the connection of the pull-up belt 2 to ensure safety.

It should be noted that the back of the seat 1 comprises two pull-up mounting slots 10, and the two pull-up mounting slots 10 are disposed with spacing at the upper end of the back of the seat 1. The two ends of the pull-up belt 2 are respectively disposed in the two pull-up belt mounting slots 10. Each of the pull-up belt mounting slots 10 is provided with a trigger component 31and a communication component. The two communication components transmit the data of each pressure sensors 311 to the mobile device 4. By analyzing the data of the pressure sensors 311, it can be known whether the pull-up belt 2 is tightened and the tightening degree, and by comparing the data of the pressure sensors 311 of the two ends 21 of the pull-up belt 2, it can be determined whether the forces applied to the pull-up belt 2 are symmetrical.

According to the data displayed on the mobile device 4, the user can adjust the pull-up belt 2 and observe the display module of the mobile device 4 to determine in real time whether the adjustment is in place.

In addition, it is possible that one end of the pull-up belt 2 is fixed, and the other end of the pull-up belt 2 is adjustably mounted in the pull-up belt mounting slot 10.

In some other embodiments, the pull-up belt 2 can include a plurality of belts, and the back of the seat 1 correspondingly comprises a plurality of pull-up belt mounting slots 10.

## Claims

1. A pull-up belt tightening state detecting system for detecting whether the pull-up belt (2) is tightened, **characterized by** comprising :
a trigger component (31), being mounted at a junction of the pull-up belt (2) and the child safety chair, the trigger component (31) sending a signal by the action of the pull-up belt (2) when the pull-up belt is tightened; and
a communication component, being connected to the trigger component (31) for transmitting the signal of the trigger component (31) to a mobile device (4), the trigger component (31) having pressure sensor (311) and trigger element (312), the pressure sensor being disposed in back of the child safety chair, the trigger element (312) being disposed on an inner side of the pressure sensor, end (21) of the pull-up belt (2) being connected to the trigger element (312) so that when the pull-up belt (2) is tightened, the pressure sensor (311) is pressed by the trigger element (312) to send a signal.

2. The pull-up belt tightening state detecting system according to claim 1, **characterized in that** the trigger element (312) is a buckle and an end of the pull-up belt with an adjustable length is adapted to be connected to the trigger element.

3. The pull-up belt tightening state detecting system according to claim 1 or 2, **characterized in that** the pull-up belt tightening state detecting system further comprises a mobile device (4), the mobile device (4) and the communication component being connected by the signal, the mobile device (4) having a display module (41), and the mobile device (4) displaying corresponding information on the display module (41) based on the signal sent by the communication component.

4. A child safety chair comprising a seat and a pull-up belt, **characterized in that** back of the seat (1) is provided with pull-up belt mounting slot (10), and end (21) of the pull-up belt (2) is disposed in the pull-up belt mounting slot (10), the child safety chair further comprising a pull-up belt tightening state detecting system, the pull-up belt tightening state detecting system comprising a trigger component (31) and a communication component, the trigger component (31) being disposed in the pull-up belt mounting slot (10) and cooperating with the end (21) of the pull-up belt (2), the trigger component (31) being activated to send a signal by the pull-up belt (2) when the pull-up belt (2) is tightened, and the communication component being coupled to the signal of the trigger component (31) for transmitting the signal of the trigger component (31) to a mobile device (4); the trigger component (31) includes pressure sensor (311) and trigger element (312), the trigger element (312) being movably disposed in the pull-up belt mounting slot (10), the end of the pull-up belt (2) being connected to the trigger element (312) through opening of the pull-up belt mounting slot (10), and the pressure sensor (311) being disposed on the inner wall of the pull-up belt mounting slot (10), so that the trigger element (312) presses against the pressure sensor (311) when the pull-up belt (2) is tightened.

5. The child safety chair according to claim 4, **characterized in that** the trigger element (312) is a buckle and the end (21) of the pull-up belt (2) with an adjustable length is connected to the trigger element (312).

6. The child safety chair according to claim 5, **characterized in that** the trigger component (31) comprises two pressure sensors (311) and the two pressure sensors (311) are symmetrically disposed on the inner wall of the pull-up belt mounting slot (10).

7. The child safety chair according to one of claims 4 to 6, **characterized in that** the back of the seat (1) comprises two pull-up belt mounting slots (10) disposed with spacing, two ends of the pull-up belt (2) being respectively disposed in the two pull-up belt mounting slots (10), and each of the pull-up belt mounting slots (10) is provided with one said trigger component (31) and one said communication component.

8. The child safety chair according to one of claims 4 to 6, **characterized in that** the pull-up belt tightening state detecting system further comprises a mobile device (4), the mobile device (4) and the communication component being connected by signal, the mobile device (4) having a display module (41), and the mobile device (4) displaying corresponding information on the display module (41) based on the signal sent by the communication component.

## Patentansprüche

1. System zur Erkennung des Straffungszustands eines Hochziehgurts, um zu erkennen, ob der Hochziehgurt (2) gestrafft ist, **dadurch gekennzeichnet, dass** es umfasst:
eine Auslösekomponente (31), die an einer Verbindung des Hochziehgurts (2) und des Kindersicherheitssitzes befestigt ist, wobei die Auslösekomponente (31) durch die Wirkung des Hochziehgurts (2) ein Signal sendet, wenn der Hochziehgurt gestrafft wird; und
eine Kommunikationskomponente, die mit der Auslösekomponente (31) verbunden ist, um das Signal der Auslösekomponente (31) an eine mobile Vorrichtung (4) zu senden, wobei die Auslösekomponente (31) einen Drucksensor (311) und ein Auslöseelement (312) aufweist, wobei der Drucksensor in der Rückseite des Kindersicherheitssitzes angeordnet ist, wobei das Auslöseelement (312) auf einer Innenseite des Drucksensors angeordnet ist, wobei ein Ende (21) des Hochziehgurts (2) mit dem Auslöseelement (312) verbunden ist, sodass, wenn der Hochziehgurt (2) gestrafft wird, der Drucksensor (311) von dem Auslöseelement (312) gedrückt wird, um ein Signal zu senden.

2. System zur Erkennung des Straffungszustands eines Hochziehgurts nach Anspruch 1, **dadurch gekennzeichnet, dass** das Auslöseelement (312) eine Schnalle ist und ein Ende des Hochziehgurts mit einer verstellbaren Länge angepasst ist, um mit dem Auslöseelement verbunden zu werden.

3. System zur Erkennung des Straffungszustands eines Hochziehgurts nach Anspruch 1 oder 2, **dadurch gekennzeichnet, dass** das System zur Erkennung des Straffungszustands eines Hochziehgurts weiter eine mobile Vorrichtung (4) umfasst, wobei die mobile Vorrichtung (4) und die Kommunikationskomponente durch das Signal verbunden werden, wobei die mobile Vorrichtung (4) ein Anzeigemodul (41) aufweist, und wobei die mobile Vorrichtung (4) entsprechende Informationen auf dem Anzeigemodul (41) basierend auf dem Signal anzeigt, das von der Kommunikationskomponente gesendet wird.

4. Kindersicherheitssitz, umfassend einen Sitz und einen Hochziehgurt, **dadurch gekennzeichnet, dass** die Rückseite des Sitzes (1) mit einem Hochziehgurt-Befestigungsschlitz (10) versehen ist und ein Ende (21) des Hochziehgurts (2) in dem Hochziehgurt-Befestigungsschlitz (10) angeordnet ist, wobei der Kindersicherheitssitz weiter ein System zur Erkennung des Straffungszustands eines Hochziehgurts umfasst, wobei das System zur Erkennung des Straffungszustands eines Hochziehgurts eine Auslösekomponente (31) und eine Kommunikationskomponente umfasst, wobei die Auslösekomponente (31) in dem Hochziehgurt-Befestigungsschlitz (10) angeordnet ist und mit dem Ende (21) des Hochziehgurts (2) zusammenwirkt, wobei die Auslösekomponente (31) aktiviert wird, um ein Signal durch den Hochziehgurt (2) zu senden, wenn der Hochziehgurt (2) gestrafft wird, und wobei die Kommunikationskomponente an das Signal der Auslösekomponente (31) gekoppelt ist, um das Signal der Auslösekomponente (31) an eine mobile Vorrichtung (4) zu senden; wobei die Auslösekomponente (31) einen Drucksensor (311) und ein Auslöseelement (312) umfasst, wobei das Auslöseelement (312) in dem Hochziehgurt-Befestigungsschlitz (10) beweglich angeordnet ist, wobei das Ende des Hochziehgurts (2) mit dem Auslöseelement (312) durch eine Öffnung des Hochziehgurt-Befestigungsschlitzes (10) verbunden ist, und wobei der Drucksensor (311) auf der Innenwand des Hochziehgurt-Befestigungsschlitzes (10) angeordnet ist, sodass das Auslöseelement (312) gegen den Drucksensor (311) drückt, wenn der Hochziehgurt (2) gestrafft wird.

5. Kindersicherheitssitz nach Anspruch 4, **dadurch gekennzeichnet, dass** das Auslöseelement (312) eine Schnalle ist und das Ende (21) des Hochziehgurts (2) mit einer verstellbaren Länge mit dem Auslöseelement (312) verbunden ist.

6. Kindersicherheitssitz nach Anspruch 5, **dadurch gekennzeichnet, dass** die Auslösekomponente (31) zwei Drucksensoren (311) umfasst und die zwei Drucksensoren (311) auf der Innenwand des Hochziehgurt-Befestigungsschlitzes (10) symmetrisch angeordnet sind.

7. Kindersicherheitssitz nach einem der Ansprüche 4 bis 6, **dadurch gekennzeichnet, dass** die Rückseite des Sitzes (1) zwei Hochziehgurt-Befestigungsschlitze (10) umfasst, die beabstandet angeordnet sind, wobei zwei Enden des Hochziehgurts (2) jeweils in den zwei Hochziehgurt-Befestigungsschlitzen (10) angeordnet sind, und jeder der Hochziehgurt-Befestigungsschlitze (10) mit einer Auslösekomponente (31) und einer Kommunikationskomponente versehen ist.

8. Kindersicherheitssitz nach einem der Ansprüche 4 bis 6, **dadurch gekennzeichnet, dass** das System zur Erkennung des Straffungszustands eines Hochziehgurts weiter eine mobile Vorrichtung (4) umfasst, wobei die mobile Vorrichtung (4) und die Kommunikationskomponente durch das Signal verbunden werden, wobei die mobile Vorrichtung (4) ein Anzeigemodul (41) aufweist, und wobei die mobile Vorrichtung (4) entsprechende Informationen auf dem Anzeigemodul (41) basierend auf dem Signal anzeigt, das von der Kommunikationskomponente gesendet wird.

## Revendications

1. Système de détection d'état de tension de courroie de traction permettant de détecter si la courroie de traction (2) est tendue, **caractérisé en ce qu'**il comprend :
un composant déclencheur (31), qui est monté au niveau d'une jonction de la courroie de traction (2) et du siège de sécurité pour enfant, le composant déclencheur (31) envoyant un signal par l'action de la courroie de traction (2) lorsque la courroie de traction est tendue ; et
un composant de communication, qui est connecté au composant déclencheur (31) pour transmettre le signal du composant déclencheur (31) à un dispositif mobile (4), le composant déclencheur (31) ayant un capteur de pression (311) et un élément déclencheur (312), le capteur de pression étant disposé dans le dos du siège de sécurité pour enfant, l'élément déclencheur (312) étant disposé sur un côté intérieur du capteur de pression, une extrémité (21) de la courroie de traction (2) étant connectée à l'élément déclencheur (312) de sorte que lorsque la courroie de traction (2) est tendue, le capteur de pression (311) soit pressé par l'élément déclencheur (312) pour envoyer un signal.

2. Système de détection d'état de tension de courroie de traction selon la revendication 1, **caractérisé en ce que** l'élément déclencheur (312) est une boucle et une extrémité de la courroie de traction avec une longueur ajustable est adaptée pour être connectée à l'élément déclencheur.

3. Système de détection d'état de tension de courroie de traction selon la revendication 1 ou 2, **caractérisé en ce que** le système de détection d'état de tension de courroie de traction comprend en outre un dispositif mobile (4), le dispositif mobile (4) et le composant de communication étant connectés par le signal, le dispositif mobile (4) ayant un module d'affichage (41), et le dispositif mobile (4) affichant des informations correspondantes sur le module d'affichage (41) sur la base du signal envoyé par le composant de communication.

4. Siège de sécurité pour enfant comprenant un siège et une courroie de traction, **caractérisé en ce que** le dos du siège (1) est pourvu d'une fente de montage de courroie de traction (10), et une extrémité (21) de la courroie de traction (2) est disposée dans la fente de montage de courroie de traction (10), le siège de sécurité pour enfant comprenant en outre un système de détection d'état de tension de courroie de traction, le système de détection d'état de tension de courroie de traction comprenant un composant déclencheur (31) et un composant de communication, le composant déclencheur (31) étant disposé dans la fente de montage de courroie de traction (10) et coopérant avec l'extrémité (21) de la courroie de traction (2), le composant déclencheur (31) étant activé pour envoyer un signal par la courroie de traction (2) lorsque la courroie de traction (2) est tendue, et le composant de communication étant couplé au signal du composant déclencheur (31) pour transmettre le signal du composant déclencheur (31) à un dispositif mobile (4) ; le composant déclencheur (31) inclut un capteur de pression (311) et un élément déclencheur (312), l'élément déclencheur (312) étant disposé de manière mobile dans la fente de montage de courroie de traction (10), l'extrémité de la courroie de traction (2) étant connectée à l'élément déclencheur (312) à travers une ouverture de la fente de montage de courroie de traction (10), et le capteur de pression (311) étant disposé sur la paroi intérieure de la fente de montage de courroie de traction (10), de sorte que l'élément déclencheur (312) presse sur le capteur de pression (311) lorsque la courroie de traction (2) est tendue.

5. Siège de sécurité pour enfant selon la revendication 4, **caractérisé en ce que** l'élément déclencheur (312) est une boucle et l'extrémité (21) de la courroie de traction (2) avec une longueur ajustable est connectée à l'élément déclencheur (312).

6. Siège de sécurité pour enfant selon la revendication 5, **caractérisé en ce que** le composant déclencheur (31) comprend deux capteurs de pression (311) et les deux capteurs de pression (311) sont disposés de manière symétrique sur la paroi intérieure de la fente de montage de courroie de traction (10).

7. Siège de sécurité pour enfant selon l'une des revendications 4 à 6, **caractérisé en ce que** le dos du siège (1) comprend deux fentes de montage de courroie de traction (10) disposées avec un espacement, deux extrémités de la courroie de traction (2) étant disposées respectivement dans les deux fentes de montage de courroie de traction (10), et chacune des fentes de montage de courroie de traction (10) est pourvue d'un dudit composant déclencheur (31) et d'un dudit composant de communication.

8. Siège de sécurité pour enfant selon l'une des revendications 4 à 6, **caractérisé en ce que** le système de détection d'état de tension de courroie de traction comprend en outre un dispositif mobile (4), le dispositif mobile (4) et le composant de communication étant connectés par un signal, le dispositif mobile (4) ayant un module d'affichage (41), et le dispositif mobile (4) affichant des informations correspondantes sur le module d'affichage (41) sur la base du signal envoyé par le composant de communication.
